**Europäisches Patentamt**

**European Patent Office**

**Office européen des brevets**

(11) Veröffentlichungsnummer: **0 041 618**

**A2**

(12) # EUROPÄISCHE PATENTANMELDUNG

(21) Anmeldenummer: **81103572.4**

(22) Anmeldetag: **11.05.81**

(51) Int. Cl.³: **C 08 G 18/30**

(30) Priorität: **06.06.80 DE 3021293**

(43) Veröffentlichungstag der Anmeldung:
**16.12.81 Patentblatt 81/50**

(84) Benannte Vertragsstaaten:
**DE FR GB IT**

(71) Anmelder: **BASF Aktiengesellschaft
Carl-Bosch-Strasse 38
D-6700 Ludwigshafen(DE)**

(72) Erfinder: **Horacek, Heinrich, Dr.
Londoner Ring 11
D-6700 Ludwigshafen(DE)**

(72) Erfinder: **Marx, Matthias, Dr.
Seebacher Strasse 49
D-6702 Bad Duerkheim(DE)**

(72) Erfinder: **Buethe, Ingolf, Dr.
Am Wasserturm 1
D-6737 Boehl-Iggelheim(DE)**

(72) Erfinder: **Jarre, Wolfgang, Dr.
Roggensteiner Allee 124
D-8051 Eichenau(DE)**

(72) Erfinder: **Schoen, Ernst, Dr.
Burgunderstrasse 40
D-6730 Neustadt(DE)**

(54) Verfahren zur Herstellung von elastischen Polyurethanschaumstoffen.

(57) Die Erfindung betrifft ein Verfahren zur Herstellung von elastischen Polyurethanschaumstoffen durch Umsetzung von organischen Polyisocyanaten, Polyolen, gegebenenfalls substituierten aliphatischen und/oder cycloaliphatischen Monoaminen in einer Menge von 0,1 bis 10 Gewichtsteilen pro 100 Gewichtsteilen Polyol und/oder gegebenenfalls substituierten aromatischen Monoaminen in einer Menge von 0,1 bis 4 Gewichtsteilen pro 100 Gewichtsteilen Polyol sowie gegebenenfalls Kettenverlängerungs- oder Vernetzungsmitteln in Gegenwart von Treibmitteln, Katalysatoren, Hilfsmitteln und gegebenenfalls Zusatzstoffen.

EP 0 041 618 A2

Verfahren zur Herstellung von elastischen Polyurethanschaumstoffen

Die Herstellung von Polyurethanschaumstoffen aus organischen
Polyisocyanaten, Polyolen, Treibmitteln, Katalysatoren,
gegebenenfalls Kettenverlängerungs- oder Vernetzungsmitteln,
Hilfs- und Zusatzstoffen ist aus zahlreichen Patent- und
Literaturveröffentlichungen bekannt. Verweisen möchten wir
beispielsweise auf die Monographien von J.H. Saunders und
K.C. Frisch, High Polymers, Band XVI "Polyurethanes" Teil I
und II (Verlag Interscience Publishers, New York) und
R. Vieweg und A. Höchtlen, Kunststoff-Handbuch, Band VII,
Polyurethane, Carl Hanser Verlag, München.

Um allen Anwendungsgebieten gerecht zu werden, müssen die
Polyurethanschaumstoffe bei möglichst niedrigem Raumgewicht
ein hohes mechanisches Niveau aufweisen, das sich in einer
hohen Reißdehnung, Zugfestigkeit, Weiterreißfestigkeit und
Stauchhärte manifestiert.

Es hat daher nicht an Versuchen gefehlt, elastische Polyurethanschaumstoffe mit verbesserten mechanischen Eigenschaften herzustellen.

Als Verstärkungsmittel für Form- und Blockschaumstoffe aus
Polyurethanen kommen beispielsweise sogenannte Pfropfpolyole
oder hochmolekulare organische Füllstoffe in Betracht. Unter
Pfropfpolyolen versteht man dabei Polyole, auf deren Polyetherkette durch radikalische Polymerisation Polymere auf
Basis Styrol, Acrylnitril u.a. aufgepfropft worden sind.
Unter hochmolekularen Füllstoffen werden ähnliche Polymere,
die jedoch nicht auf das Polyetherol aufgepfropft, sondern
lediglich darin suspendiert sind, verstanden. Andere bekannte
Füllstoffe sind Polyharnstoffe auf Basis 2,4-Toluylendiisocyanat und Hydrazin.

Durch die genannten Verstärkungsmittel können vor allem die folgenden Eigenschaften in vorteilhafter Weise verbessert werden. Die Stauchhärte und damit verbunden die Tragfähigkeit der Schaumstoffe kann ebenso erhöht werden wie die Offenzelligkeit, die ihrerseits eine Verringerung des Nachschrumpfens von Weichschaumstoffen bewirkt. Weniger bedeutungsvoll sind eine geringfügige Vergrößerung der Zugfestigkeit und verschlechterte Reißdehnung des Schaumstoffes.

Nachteilig an diesem Verfahren ist, daß die benötigten Pfropfpolymeren und polymeren Füllstoffe in einem getrennten Arbeitsgang hergestellt werden müssen und aufgrund ihrer hohen Viskosität auf üblichen Verschäumungsmaschinen schwer zu verarbeiten sind.

Dispersionen von Copolymeren, vorzugsweise Styrol-Acrylnitril-Copolymeren in Hydroxylgruppen aufweisenden Polyethern werden beschrieben in den deutschen Patentschriften 12 22 669, 11 52 536 und 11 52 537. Werden die Vinylmonomeren direkt in den Polyolen copolymerisiert, so sind die erhaltenen Teilchen im allgemeinen so klein, daß keine Neigung zur Sedimentation besteht. Nachteilig bei diesen Dispersionen ist jedoch, daß sie frei von Monomeren sein müssen, um möglichst geruchlose Schaumstoffe zu ergeben, denn nur solche Produkte können in den typischen Einsatzgebieten verwendet werden. Dies bedeutet jedoch, daß die Monomeren, beispielsweise mit Hilfe von Dünnschichtverdampfern aus den Dispersionen abgetrennt werden müssen.

Zum Stand der Technik gehören auch Verfahren, bei denen inerte Füllstoffe organischer oder anorganischer Art in eine der zur Verschäumung dienenden Ausgangskomponente oder direkt in das Verschäumungsgemisch, beispielsweise in der Mischkammer der Verschäumungsmaschine, einverleibt werden (EP-OS 11 751). Aber auch diese Verfahren besitzen Nachteile. So ist es bei Verwendung üblicher Füllstoffe äußerst schwierig und technisch aufwendig, Dispersionen mit so feiner Kornverteilung herzustellen, daß lagerstabile Mischungen erhalten werden. Die Gefahr der Sedimentbildung ist ausgeprägt, dies führte dazu, daß derartige Dispersionen zur Vermeidung schwieriger Redispergiervorgänge stets mehr oder weniger intensiv gerührt werden müssen.

Zwar werden für besondere Zwecke der Schall- und Wärmedämmung mit Schwerspat gefüllte Polyurethanschaumstoffe verwendet. Jedoch müssen die Rohstoffe hierfür mit eigens konstruierten Maschinen verarbeitet werden, insbesondere solchen, die nach dem Prinzip der Niederdrucktechnik und mit Rührwerkvermischung arbeiten.

Die mit der Anwendung dieser Verarbeitungsmaschinen verbundenen Nachteile sind so gravierend, daß ein technischer Einsatz der gefüllten Polyurethanschaumstoffe bisher nicht erfolgte.

Die mechanischen Eigenschaften von Polyurethanschaumstoffen können außerdem durch die zusätzliche Verwendung von aromatischen Diaminen, beispielsweise 3,3'-Dichlor-4,4'-diaminodiphenylmethan oder 3,3'-dialkylsubstituierten 4,4'-Diaminodiphenylmethanen (DE-PS 12 40 654 äquivalent zu US 3 428 610) als Vernetzungsmittel verbessert werden. Nachteilig an dieser Verfahrensvariante ist, daß einige Verbindungen der genannten Art toxikologisch bedenklich sind.

Die DE-OS 19 00 778 beschreibt Polyurethanschaumstoffe mit verbesserter Zug-, Zerreiß- und Druckfestigkeit, die hergestellt werden durch Umsetzung von Polyisocyanaten mit Polyhydroxylverbindungen in Anwesenheit eines monofunktionellen, primären oder sekundären aromatischen Amins in einer Menge von 0,05 bis 0,2 Mol pro 100 Teile Polyhydroxylverbindung. Durch die Verwendung der erforderlichen, relativ großen Aminmengen wird jedoch der Druckverformungsrest der erhaltenen Schaumstoffe erheblich verschlechtert.

Aufgabe der vorliegenden Erfindung war es, elastische Polyurethanschaumstoffe mit hohem mechanischem Niveau nach einem Verfahren herzustellen, das die genannten Nachteile nicht aufweist. Ferner sollte die Offenzelligkeit der Schaumstoffe erhöht werden.

Diese Aufgabe wurde gelöst durch ein Verfahren zur Herstellung von elastischen Polyurethanschaumstoffen durch Umsetzung von organischen Polyisocyanaten, Polyolen, Aminen und gegebenenfalls Kettenverlängerungs- oder Vernetzungsmitteln in Gegenwart von Treibmitteln, Katalysatoren, Hilfsmitteln und Zusatzstoffen, das dadurch gekennzeichnet ist, daß man als Amine primäre und/oder sekundäre gegebenenfalls substituierte aliphatische und/oder cycloaliphatische Monoamine in einer Menge von 0,1 bis 10 Gewichtsteilen pro 100 Gewichtsteilen Polyol und/oder gegebenenfalls substituierte aromatische Monoamine in einer Menge von 0,1 bis 4 Gewichtsteilen pro 100 Gewichtsteilen Polyol verwendet.

Die nach dem erfindungsgemäßen Verfahren hergestellten Polyurethanschaumstoffe zeichnen sich durch eine deutlich höhere Zugfestigkeit, Dehnung, Weiterreißfestigkeit und Stauchhärte sowie insbesondere eine größere Offenzelligkeit aus.

Nach dem erfindungsgemäßen Verfahren werden halbharte und vorzugsweise weichelastische Polyurethanschaumstoffe hergestellt. Zu den verwendbaren Ausgangskomponenten ist folgendes auszuführen:

Als organische Polyisocyanate kommen beispielsweise aliphatische, cycloaliphatische, arylaliphatische, heterocyclische und vorzugsweise aromatische mehrwertige Isocyanate in Betracht. Im einzelnen seien beispielhaft genannt: aliphatische Diisocyanate, wie Äthylen-, 1,4-Tetramethylen-, 1,6-Hexamethylen- und 1,12-Dodecandiisocyanat; cycloaliphatische Diisocyanate, wie Cyclohexan-1,3- und 1,4-diisocyanat sowie beliebige Gemische dieser Isomeren, 1-Isocyanato-3,3,5-trimethyl-5-isocyanatomethyl-cyclohexan, 2,4- und 2,6-Hexahydrotoluylen-diisocyanat sowie beliebige Gemische dieser Isomeren, 4,4'- und 2,4'-Diisocyanato-dicyclohexylmethan; aromatische Diisocyanate, wie 1,3- und 1,4-Phenylendiisocyanat, 2,4- und 2,6-Toluylendiisocyanat sowie beliebige Gemische dieser Isomeren, 2,2'-, 2,4'- und 4,4'-Diphenylmethan-diisocyanat und Naphthalin-1,5-diisocyanat; aromatische Polyisocyanate wie 4,4',4"-Triphenylmethan-triisocyanat, 2,4,6-Triisocyanatobenzol und Polyphenyl-polymethylen-polyisocyanate. Verwendet werden können ferner modifizierte Polyisocyanate, beispielsweise solche wie sie in der US-PS 3 492 330 beschrieben werden, Carbodiimidgruppen aufweisende Polyisocyanate (DE-PS 10 92 007), Allophanatgruppen aufweisende Polyisocyanate (GB-PS 994 890; BE-PS 761 626), Isocyanuratgruppen aufweisende Polyisocyanate (DE-PS 10 22 789, DE-PS 12 22 067, DE-PS 10 27 394, DE-OS 19 29 034 und DE-OS 20 04 048), Urethangruppen aufweisende Polyisocyanate (BE-PS 752 261, US-PS 3 394 164), Biuretgruppen aufweisende Polyisocyanate (DE-PS 11 01 394, GB-PS 889 050) und Estergruppen aufweisende Polyisocyanate (GB-PS 965 474, GB-PS 10 72 956, US-PS 3 567 763, DE-PS 12 31 688).

Bevorzugt verwendet werden die technisch gut zugänglichen aromatischen Di- und Polyisocyanate wie 2,4- und 2,6--Toluylendiisocyanat sowie beliebige Gemische dieser Isomeren, 2,2'-, 2,4'- und 4,4'-Diphenylmethan-diisocyanat sowie beliebige Gemische dieser Isomeren, Mischungen aus 2,2'-, 2,4'-, 4,4'-Diphenylmethan-diisocyanaten und Polyphenyl-polymethylen-polyisocyanaten (Roh-MDI) und Gemische aus Toluylen-diisocyanaten und Roh-MDI. Die genannten Di- und Polyisocyanate können einzeln oder in Form von Mischungen eingesetzt werden.

Als Polyole werden bei dem erfindungsgemäßen Verfahren vorzugsweise übliche lineare und/oder verzweigte Polyesterole und insbesondere Polyetherole mit Molekulargewichten von 200 bis 8000, vorzugsweise 800 bis 5000, und insbesonders 1800 bis 3500, verwendet. In Betracht kommen jedoch auch andere hydroxylgruppenhaltige Polymere mit den genannten Molekulargewichten, beispielsweise Polyesteramide, Polyacetale und Polycarbonate, insbesondere solche, hergestellt aus Diphenylcarbonat und Hexandiol-1,6 durch Umesterung.

Die Polyesterole können beispielsweise aus Dicarbonsäuren, vorzugsweise aliphatischen Dicarbonsäuren, mit 2 bis 12, vorzugsweise 4 bis 8 Kohlenstoffatomen im Alkylenrest und mehrwertigen Alkoholen, vorzugsweise Diolen, hergestellt werden. Genannt seien beispielhaft aliphatische Dicarbonsäuren, wie Glutarsäure, Pimelinsäure, Korksäure, Azelainsäure, Sebacinsäure, Undecandisäure, Dodecandisäure und vorzugsweise Bernstein- und Adipinsäure, und aromatische Dicarbonsäuren, wie Phthalsäure und Terephthalsäure. Beispiele für zwei- und mehrwertige, insbesondere zwei- und

0041618

dreiwertige Alkohole sind: Ethylenglykol, Diethylenglykol, 1,2- bzw. 1,3-Propylenglykol, Dipropylenglykol, Decandiol-1,10, Glycerin, Trimethylolpropan und vorzugsweise Butandiol-1,4 und Hexandiol-1,6. Sofern zur Herstellung der Polyesterole mehrwertige, insbesondere dreiwertige Alkohole mitverwendet werden, wird deren Gehalt zweckmäßigerweise so berechnet, daß die Funktionalität der erhaltenen Polyesterole maximal 6, vorzugsweise 2 bis 4 ist.

Die Polyesterole besitzen Molekulargewichte von 500 bis 2 800, vorzugsweise von 1 000 bis 2 000, und Hydroxylzahlen von 40 bis 280, vorzugsweise von 50 bis 120.

Vorzugsweise als Polyole verwendet werden jedoch Polyetherole, die nach bekannten Verfahren aus einem oder mehreren Alkylenoxiden mit 2 bis 4 Kohlenstoffatomen im Alkylenrest und einem Startermolekül, das 2 bis 4, vorzugsweise 2 bis 3 aktive Wasserstoffatome enthält, hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, organische Dicarbonsäure, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan; Monoamine, wie Methylamin, Ethylamin, Isopropylamin, Butylamin, Benzylamin, Anilin, die Toluidine und Naphthylamine. Von den Verbindungen der erwähnten Gruppe sind besonders interessant N,N,N',N'-Tetrakis-(2-hydroxyethyl)-ethylendiamin, N,N,N',N'-Tetrakis-(2-hydroxypropyl)-ethylendiamin, N,N,N',N'',N''-Pentakis-(2-hydroxypropyl-)ethylentriamin, Phenyldiisopropanolamin und höhere Alkylenoxidaddukte von Anilin.

Als Startermoleküle kommen ferner in Betracht Alkanolamine, wie Ethanolamin, Diethanolamin, N-Methyl- und N-Ethyl-diethanolamin, N-Methyl- und N-Ethyl-dipropanolamin und Triethanolamin, Hydrazin und Hydrazide. Vorzugsweise verwendet werden mehrwertige, insbesondere zwei- und/oder dreiwertige Alkohole, wie Ethylenglykol, Propylenglykol-1,2 und -1,3, Diethylenglykol, Dipropylglykol, Butylenglykol-1,4, Hexamethylenglykol-1,6, Glycerin, Trimethylol-propan und Pentaerythrit.

Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen, oder Mischungen aus mehrwertigen Alkoholen und Aminoalkoholen und/oder Polyaminen gewonnenen, vorwiegend linearen Kondensate.

Als Polyacetale kommen z.B. die aus Glykolen, wie Diethylenglykol, Triethylenglykol, 4,4'-Dioxethoxy-diphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol mit Diarylcarbonaten, z.B. Diphenylcarbonat oder Phosgen, hergestellt werden können.

Die Polyole können einzeln oder in Form von Mischungen verwendet werden. Bewährt haben sich beispielsweise Mischungen aus Polyester- und Polyetherolen, wobei das Verhältnis der Komponenten je nach Verwendungszweck des herzustellenden Polyurethanhartschaumstoffs in breiten Grenzen, beispielsweise im Gewichtsverhältnis von Polyesterol zu Polyetherol von 20:80 bis 80:20 variiert werden kann.

Wesentliches Merkmal der vorliegenden Erfindung ist die Mitverwendung von primären und/oder sekundären gegebenenfalls substituierten aliphatischen, cycloaliphatischen und/oder aromatischen Monoaminen zur Herstellung der Polyurethanschaumstoffe, wobei die gegebenenfalls vorhandenen, an Kohlenstoffatome gebundenen Substituenten keine weiteren mit Isocyanaten reagierende Gruppen besitzen dürfen. In Betracht kommen primäre und/oder sekundäre Alkylamine mit 1 bis 18, vorzugsweise 6 bis 18 Kohlenstoffatomen, cycloaliphatische Monoamine mit 6 bis 18, vorzugsweise 6 bis 12 Kohlenstoffatomen und aromatische Monoamine mit 6 bis 18, vorzugsweise 6 bis 12 Kohlenstoffatomen. Als Substituenten genannt seien beispielsweise Alkylreste mit 1 bis 8, vorzugsweise 1 bis 4 Kohlenstoffatomen, wie der Methyl-, Ethyl-, n-Propyl-, iso-Propyl-, n-Butyl- und n-Hexylrest; Alkoxyreste mit 1 bis 7, vorzugsweise 1 bis 3 Kohlenstoffatomen, wie der Methoxi-, Ethoxi-, n-Propoxi-und iso-Propoxirest, Arylreste, wie die Phenylgruppe und Halogenatome, wie Fluor, Chlor und Brom.

Als geeignete, gegebenenfalls substituierte primäre und sekundäre Monoamine haben sich beispielsweise bewährt: aliphatische Monoamine, wie n-Propyl-, 3-Methoxipropyl-, n-Butyl-, N,N-Di-n-butyl-, n-Amyl-, n-Hexyl-, 2-Ethyl-hexyl-, N,N-Di-(2-ethylhexyl-), N-Ethyl-N-n-hexyl-, N-n-Propyl-N-s-butyl-, N-Ethyl-N-n-butyl, n-Octyl-, n-Dodecyl-, n-Octadecyl-, Phenylethyl- und Allylamin; cycloaliphatische Monoamine, wie Cyclohexyl-, 4-Ethylhexyl- und N,N-Dicyclohexylamin und aromatische Monoamine, wie Anilin, Diphenylamin, 4-Fluoranilin, N-Methylanilin und 4-Methoxyanilin. Vorzugsweise verwendet werden Cyclohexylamin, 2-Ethylhexylamin, Octadecylamin, N,N-Di-(2-ethylhexylamin), Phenylethylamin und Anilin.

Die gegebenenfalls substituierten primären und sekundären Monoamine können einzeln oder als Mischungen eingesetzt werden. Die aliphatischen und/oder cycloaliphatischen Monoamine werden verwendet in Mengen von 0,1 bis 10 Gewichtsteilen, vorzugsweise 0,5 bis 6 Gewichtsteilen pro 100 Gewichtsteilen Polyol, während die aromatischen Monoamine in Mengen von 0,1 bis 4 Gewichtsteilen, vorzugsweise 0,4 bis 3 Gewichtsteilen pro 100 Gewichtsteilen Polyol Anwendung finden.

Gegebenenfalls kann es zweckmäßig sein, neben den genannten Polyolen zusätzlich Kettenverlängerungsmittel oder Vernetzungsmittel, zur Herstellung der Polyurethanschaumstoffe mitzuverwenden. Als derartige Mittel kommen polyfunktionelle, insbesondere di- und trifunktionelle Verbindungen mit Molekulargewichten von 17 bis 600, vorzugsweise 60 bis 300, in Betracht. Verwendet werden beispielsweise Di- und Trialkanolamine, wie Diethanolamin und Triethanolamin, aliphatische und aromatische Diamine, wie z.B. Ethylendiamin, Butylendiamin-1,4, Hexamethylendiamin-1,6, 4,4'-Diamino-diphenylmethan, 3,3'-dialkylsubstituierte 4,4'-Diaminodiphenylmethane, 2,4- und 2,6-Toluylendiamin und vorzugsweise aliphatische Diole und Triole mit 2 bis 6 Kohlenstoffatomen, wie Ethylenglykol, 1,4-Butylenglykol, 1,6-Hexamethylenglykol, Glyzerin und Trimethylolpropan.

Sofern Kettenverlängerungs- oder Vernetzungsmittel eingesetzt werden, kommen diese in Mengen von 1 bis 60, vorzugsweise von 10 bis 30 pro 100 Gew.-Teile Polyol zur Anwendung.

Zu Treibmitteln, welche im erfindungsgemäßen Verfahren verwendet werden können, gehört vorzugsweise Wasser, das mit Isocyanatgruppen unter Bildung von Kohlendioxid reagiert. Die Wassermengen, die zweckmäßigerweise verwendet werden können, betragen 0,1 bis 8 Gewichtsteile, vorzugsweise 1,5 bis 5 Gewichtsteile, bezogen auf 100 Gewichtsteile Polyol.

Im Gemisch mit Wasser können auch physikalisch wirkende Treibmittel eingesetzt werden. Geeignet sind Flüssigkeiten, welche gegenüber den organischen Polyisocyanaten inert sind und Siedepunkte unter $100^{o}C$, vorzugsweise unter $50^{o}C$, insbesondere zwischen $-50^{o}C$ und $30^{o}C$ bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie Pentan, n- und iso-Butan und Propan, Ether, wie Dimethylether und Diethylether, Ketone, wie Aceton und Methylethylketon, Ethylacetat und vorzugsweise halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder

0041618

unsubstituierten Kohlenwasserstoffen können verwendet werden.

Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 50 Gewichtsteile, vorzugsweise 0 bis 20 Gewichtsteile pro 100 Gewichtsteile Polyol. Gegebenenfalls kann es zweckmäßig sein, das organische Polyisocyanat mit dem physikalisch wirkenden Treibmittel zu mischen und dadurch die Viskosität zu verringern.

Zur Beschleunigung der Umsetzung zwischen den Polyolen, Wasser und gegebenenfalls Kettenverlängerungs- oder Vernetzungsmittel und den organischen Polyisocyanaten werden der Reaktionsmischung übliche Polyurethankatalysatoren einverleibt. Vorzugsweise verwendet werden basische Polyurethankatalysatoren, beispielsweise tertiäre Amine, wie Dimethylbenzylamin, Dicyclohexylmethylamin, Dimethylcyclohexylamin, N,N,N',N'-Tetramethyl-diamino-ethylether, Bis--(dimethylaminopropyl)-harnstoff, N-Methyl- bzw. N-Äthylmorpholin, Dimethylpiperazin, Pyridin, 1,2-Dimethylimidazol, 1-Azobicyclo-(3,3,0)-octan, Dimethylaminoethanol, N,N',N"--Tris-(dialkylaminoalkyl)-hexahydrotriazine, z.B. N,N',N"--Tris-(dimethylaminopropyl)-s-hexahydrotriazin und insbesondere Triethylendiamin. Geeignet sind jedoch auch Metallsalze, wie Eisen-(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen. Eingesetzt werden zweckmäßigerweise 0,1 bis 10 Gew.%, vorzugsweise 0,5 bis 5 Gew.% Katalysator auf Basis tertiärer Amine und/oder 0,01 bis 0,5 Gew.%, vorzugsweise 0,05 bis 0,25 Gew.% Metallsalze, bezogen auf das Polyolgewicht.

Der Reaktionsmischung können auch noch Hilfsmittel und Zusatzstoffe einverleibt werden. Genannt seien beispielsweise Stabilisatoren, Hydrolysenschutzmittel, Porenregler, fungistatisch und bakteriostatisch wirkende Substanzen, Farbstoffe, Pigmente, Füllstoffe, oberflächenaktive Stoffe, Weichmacher und Flammschutzmittel.

In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl- bzw. Rizinolsäureester und Türkischrotöl, die in Mengen von 0,2 bis 8, vorzugsweise von 0,5 bis 5 Gewichtsteilen pro 100 Gewichtsteilen Polyol angewandt werden.

Es kann auch vorteilhaft sein, einen Weichmacher in das Reaktionsgemisch einzubeziehen, so daß die Neigung zur Sprödigkeit in den Produkten verringert wird. Es können übliche Weichmachungsmittel verwendet werden, doch ist es besonders zweckmäßig, solche Mittel zu verwenden, die Phosphor und/oder Halogenatome enthalten und dadurch die Flammfestigkeit der Polyurethankunststoffe zusätzlich vergrößern. Zu solchen Mitteln gehören Trikresylphosphat, Tris-2-chlorethylphosphat, Tris-chlorpropylphosphat und Tris-2,3-dibrompropylphosphat.

Außer den bereits genannten halogensubstituierten Phosphaten können auch anorganische Flammschutzmittel, beispielsweise Antimontrioxid, Arsenoxid, Ammoniumphosphat und Calciumsulfat und Melamin zum Flammfestmachen der Polyurethanschaumstoffe verwendet werden.

Im allgemeinen hat es sich als vorteilhaft erwiesen, 5 bis 50 Gewichtsteile, vorzugsweise 5 bis 25 Gewichtsteile der genannten Flammschutzmittel pro 100 Gewichtsteile Polyol zu verwenden.

Zur Herstellung der Polyurethanschaumstoffe nach dem erfindungsgemäßen Verfahren werden die organischen Polyisocyanate und Polyole, primären und/oder sekundären Monoamine und gegebenenfalls Kettenverlängerungs- und Vernetzungsmittel in Gegenwart von Katalysatoren, Treibmitteln und gegebenenfalls Hilfsmitteln und Zusatzstoffen bei Temperaturen von 0 bis 70°C, vorzugsweise 15 bis 50°C in solchen Mengenverhältnissen zur Reaktion gebracht, daß pro NCO-Gruppe 0,5 bis 2, vorzugsweise 0,8 bis 1,3 und insbesondere ungefähr ein reaktive(s) Wasserstoffatom(e) gebunden an Polyole, Monoamine und gegebenenfalls Kettenverlängerungs- oder Vernetzungsmittel vorliegen und das Molverhältnis von Äquivalente Wasser zu Äquivalente NCO-Gruppen 0,5 bis 5 : 1, vorzugsweise 0,7 bis 0,95 : 1 und insbesondere 0,75 bis 0,85 : 1 beträgt.

Die Polyurethanschaumstoffe werden nach dem Präpolymer- und vorzugsweise dem one shot-Verfahren hergestellt. Sofern das Präpolymer-Verfahren Anwendung findet, ist vorteilhaft das primäre und/oder sekundäre Monoamin gegebenenfalls zusammen mit untergeordneten Polyolmengen und dem organischen Polyisocyanat in einer vorgelagerten Reaktionsstufe zu einem harnstoff- und gegebenenfalls urethangruppenhaltigen Polyisocyanat umzusetzen. Nach dem one shot-Verfahren werden die Ausgangskomponenten, Hilfsmittel und Zusatzstoffe bei Verwendung einer Mischkammer mit mehreren Zulaufdüsen einzeln zugeführt und in der Mischkammer intensiv vermischt. Als besonders zweckmäßig hat es sich jedoch erwiesen, so daß diese Verfahrensweise bevorzugt angewandt wird, nach dem Zweikomponenten-Verfahren zu arbeiten und die Polyole, primären und/oder sekundären Monoamine, Katalysatoren, Treibmittel und gegebenenfalls Kettenverlängerungs- oder Vernetzungsmittel, Hilfsmittel und Zusatzstoffe zu der sogenannten A-Komponente zu vereinigen und als B-Komponente die organischen Polyisocyanate gegebenenfalls im Gemisch mit physikalisch wirkenden Treibmitteln, Hilfsmittel und Zusatzstoffen zu verwenden. Vorteilhaft ist hierbei, daß die A- und B-Komponente raumsparend transportiert und beschränkte Zeit gelagert werden können und vor Herstellung der Polyurethanschaumstoffe nur noch intensiv gemischt werden müssen.

Die nach dem erfindungsgemäßen Verfahren hergestellten Polyurethanschaumstoffe besitzen Dichten von 15 bis 200 kg/m$^3$, vorzugsweise 30 bis 60 kg/m$^3$ und zeichnen sich durch erhöhte Zugfestigkeit, Reißdehnung, Weiterreißfestigkeit und verbesserte Stauchhärte bzw. Stauchfaktor aus.

Die hochelastischen Polyurethan-Weichschaumstoffe eignen sich zur Herstellung von Polstermöbeln, Matratzen, Automobilsitzen und Nackenstützen sowie insbesondere für Formschaumstoffe. Die halbharten Polyurethanschaumstoffe werden verwendet als Hinterschäumung von Armaturentafeln in Automobilen, Wärme- und Schallisolierungen in Bauten und Fahrzeugen und zur Stoßabsorption bei Verpackungen.

Die in den Beispielen genannten Teile beziehen sich auf das Gewicht.

Beispiele 1 bis 6 und Vergleichsbeispiel A

Zur Herstellung von Polyurethan-Weichschaumstoffen werden die Raumtemperatur aufweisende A- und B-Komponente bei Raumtemperatur intensiv vermischt und 800 g der Mischung in eine auf 40°C vorgeheizte, geschlossene Form (40 cm x 40 cm x 10 cm) eingefüllt und aufschäumen gelassen.

Die verwendeten Ausgangskomponenten und Mengen sowie die an den erhaltenen Polyurethanschaumstoffen gemessenen Raumgewichte und mechanischen Eigenschaften sind in Tabelle 1 zusammengefaßt.

Die Isocyanatkennzahl der Beispiele und des Vergleichsbeispiels war 100.

Tabelle 1

| Beispiele/ Vergleichsbeispiel | 1 | 2 | 3 | 4 | 5 | 6 | A |
|---|---|---|---|---|---|---|---|
| Ausgangskomponenten | | | | | | | |
| A-Komponente: | | | | | | | |
| Polyetherol auf Basis Trimethylolpropan, Propylenoxid, Ethylenoxid mit einer OH-Zahl von 35 [Gew.-Teile] | 97 | 97 | 97 | 97 | 97 | 97 | 100 |
| Cyclohexylamin [Gew.-Teile] | 3 | – | – | – | – | – | – |
| 2-Ethylhexylamin " " | – | 3 | – | – | – | – | – |
| Anilin " " | – | – | 3 | – | – | – | – |
| Phenylethylamin " " | – | – | – | 3 | – | – | – |
| 3-Methoxypropylamin " " | – | – | – | – | 3 | – | – |
| Di-(2-ethylhexyl)amin " " | – | – | – | – | – | 3 | – |
| Wasser [Gew.-Teile] | 3 | 3 | 3 | 3 | 3 | 3 | 3 |
| Schaumstabilisator auf Basis eines Polydimethylsiloxans (Handelsprodukt ®Tego-stab B 4690 der Fa. Goldschmidt AG, Essen [Gew.-Teile] | 0,8 | 0,8 | 0,8 | 0,8 | 0,8 | 0,8 | 0,8 |
| 33%ige Lösung von Diazabicyclooctan in Dipropylenglykol [Gew.-Teile] | 1,0 | 1,0 | 1,0 | 1,0 | 1,0 | 1,0 | 1,0 |
| Dicyclohexylmethylamin [Gew.-Teile] | 1,0 | 1,0 | 1,0 | 1,0 | 1,0 | 1,0 | 1,0 |

O.Z. 0050/034489

0041618

Tabelle 1 (Fortsetzung)

| Beispiele/ Vergleichsbeispiel | | 1 | 2 | 3 | 4 | 5 | 6 | A |
|---|---|---|---|---|---|---|---|---|
| Ausgangskomponenten | | | | | | | | |
| B-Komponente: | | | | | | | | |
| Mischung aus 2,4- und 2,6-Toluylendiisocyanat (im Verhältnis 80:20) und eines Gemisches aus Diphenylmethandiisocyanaten und Polyphenyl-polymethylen-polyisocyanaten im Gewichts-verhältnis 80:20 | [Gew.-Teile] | 39,9 | 39,3 | 40,1 | 39,4 | 40,2 | 38,4 | 37,25 |
| Raumgewicht | [kg/m$^3$] | 50 | 50 | 50 | 50 | 50 | 50 | 50 |
| Zugfestigkeit (DIN 53571) | [kPa] | 126 | 132 | 171 | 127 | 112 | 131 | 109 |
| Reißdehnung (DIN 53571) | [%] | 170 | 177 | 214 | 163 | 150 | 171 | 137 |
| Weiterreißfestigkeit (DIN 53515) | [N/mm] | 0,62 | 0,61 | 0,75 | 0,57 | 0,53 | 0,55 | 0,48 |
| Stauchfaktor (DIN 53576) | | 3,40 | 3,05 | 3,1 | 3,1 | 3,40 | 3,0 | 3,2 |

Vergleichsbeispiel B

Verfährt man analog den Angaben der Beispiele 1 bis 6, verwendet jedoch anstelle der genannten Monoamine 3 Gewichtsteile Hexamethylendiamin, so wird die schäumfähige Reaktionsmischung sehr schnell breiartig und kollabiert danach vollständig.

Beispiel 7

A-Komponente:     Mischung aus

94    Gewichtsteilen eines Polyetherols auf Basis Trimethylolpropan, Propylenoxid und Ethylenoxid mit einer OH-Zahl von 35

3     Gewichtsteilen Wasser

0,8   Gewichtsteilen Schaumstabilisator auf Basis eines Polydimethylsiloxans (Tegostab B 4690, der Goldschmidt AG)

1,0   Gewichtsteilen einer 33%igen Lösung von Diazabicyclooctan in Dipropylenglykol und

1,0   Gewichtsteilen Dicyclohexylmethylamin.

B-Komponente:

394   Gewichtsteile einer Mischung aus 2,4- und 2,6-Toluylendiisocyanat (im Verhältnis 80:20) und eines Gemisches aus Diphenylmethandiisocyanaten und Polyphenyl-polymethylen-polyisocyanaten im Gewichtsverhältnis 80:20

30    Gewichtsteile eines Polyetherols auf Basis Trimethylolpropan, Propylenoxid und Ethylenoxid mit einer OH-Zahl von 35 und

30    Gewichtsteile 2-Phenylethylamin werden intensiv gemischt und die Mischung 2 Stunden auf 80°C erwärmt.

Anschließend läßt man auf Raumtemperatur abkühlen.
Man erhält ein harnstoff- und urethangruppenhaltiges
Polyisocyanat mit einem NCO-Gehalt von 36,2 %.

Zur Herstellung des Polyurethanschaumstoffes werden
45,4 Gewichtsteile der so erhaltenen B-Komponente und die
A-Komponente bei Raumtemperatur intensiv vermischt und
800 g der Mischung in eine auf 40°C vorgeheizte geschlossene Form (40 cm x 40 cm x 10 cm) eingefüllt und aufschäumen gelassen.

Der erhaltene Polyurethanschaumstoff besitzt ein Raumgewicht von 50 kg/m$^3$ und folgende mechanischen Eigenschaftswerte:

Zugfestigkeit          [kPa]  :  129
Reißdehnung            [%]    :  159
Weiterreißfestigkeit [N/mm] :  0,65
Stauchfaktor                  :  3,1

Beispiele 8 bis 12 und Vergleichsbeispiel C

Zur Herstellung von Polyurethan-Weichschaumstoffen werden
100 Gewichtsteile der A-Komponente nach Vergleichsbeispiel
A mit 1 bis 4 Gewichtsteilen eines Monoamins versetzt.

Die B-Komponente entspricht der in Vergleichsbeispiel A
beschriebenen.

640 g der erhaltenen Mischung werden in eine auf 40°C
vorgeheizte geschlossene Form (40 cm x 40 cm x 10 cm)
gefüllt und aufschäumen gelassen.

Die verwendeten Monoamine und Mengenverhältnisse sowie die an den erhaltenen Polyurethanschaumstoffen gemessenen mechanischen Eigenschaften sind in Tabelle 2 zusammengefaßt.

Tabelle 2

| Beispiele/ Vergleichsbeispiel | 8 | 9 | 10 | 11 | 12 | C |
|---|---|---|---|---|---|---|
| Ausgangskomponenten mechanische Eigenschaften | | | | | | |
| **Amin:** | | | | | | |
| Dodecylamin : [Gew.-Teile pro 100 Gew.-Teile der A-Komponente] | 4 | 3 | 2 | - | - | - |
| Octadecylamin : [Gew.-Teile pro 100 Gew.-Teile der A-Komponente] | - | - | - | 2 | 1 | - |
| B-Komponente [Gew.-Teile pro 100 Gew.-Teile der Mischung aus Poly--etherol und Amin] | 36,4 | 35,9 | 35,4 | 35,7 | 35,1 | 34,4 |
| Raumgewicht (DIN 53420) [kg/m$^3$] | 40 | 40 | 40 | 40 | 40 | 40 |
| Zugfestigkeit (DIN 53571) [kPa] | 150 | 140 | 130 | 130 | 130 | 110 |
| Reißdehnung (DIN 53571) [%] | 135 | 130 | 125 | 130 | 120 | 120 |
| Weiterreißfestigkeit (DIN 53515) [N/mm] | 0,6 | 0,5 | 0,4 | 0,5 | 0,4 | 0,3 |
| Stauchfaktor | 2,5 | 3,3 | 2,7 | 3,0 | 2,5 | 3,2 |
| Stauchhärte bei 20 % (DIN 53577) [N/cm$^2$] | 0,35 | 0,20 | 0,26 | 0,29 | 0,31 | 0,17 |
| Stauchhärte bei 60 % [N/cm$^2$] | 0,92 | 0,67 | 0,71 | 0,76 | 0,79 | 0,54 |

Wie aus Tabelle 2 ersichtlich ist, nehmen die Zugfestigkeit, Reißdehnung, Weiterreißfestigkeit und die Stauchhärte mit steigenden Monoaminmengen zu.

Beispiele 13 bis 17 und Vergleichsbeispiel D

A-Komponente:  Mischung aus
85 Gewichtsteilen eines Polyetherols auf Basis Glyzerin, Propylenoxid und Ethylenoxid mit einer OH-Zahl von 26
1,5 Gewichtsteilen Glyzerin
1,6 Gewichtsteilen Wasser
0,8 Gewichtsteilen Dimethylethanolamin

100 Gewichtsteile der erhaltenen A-Komponente werden unter Rühren mit 1 bis 3 Gewichtsteilen Monoamin gemischt.

B-Komponente:  Mischung aus Diphenylmethan-diisocyanaten und Polyphenyl-polymethylen-polyisocyanaten (Roh-MDI).

Zur Herstellung der Polyurethan-Halbhartschaumstoffe wird die monoaminhaltige A-Komponente und B-Komponente bei Raumtemperatur intensiv gemischt und in einer offenen Form aufschäumen gelassen.

Die verwendeten Monoamine und Mengenverhältnisse sowie die an den erhaltenen Polyurethanschaumstoffen gemessenen mechanischen Eigenschaften sind in der Tabelle 3 zusammengefaßt. Die Schaumstoffe zeichnen sich durch ein verbessertes mechanisches Eigenschaftsniveau und durch eine erhöhte Offenzelligkeit aus.

Tabelle 3

| Beispiele/Vergleichsbeispiel | | 13 | 14 | 15 | 16 | 17 | D |
|---|---|---|---|---|---|---|---|
| **Ausgangskomponenten mechanische Eigenschaften** | | | | | | | |
| Amin: | | | | | | | |
| Dodecylamin | [Gew.-Teile pro 100 Gew.-Teile der A-Komponente] | 3 | 2 | 1 | - | - | - |
| Octadecylamin | [Gew.-Teile pro 100 Gew.-Teile der A-Komponente] | - | - | - | 2 | 1 | - |
| Roh-MDI | [Gew.-Teile pro 100 Gew.-Teile der A-Komponente] | 53,2 | 52,1 | 51,1 | 51,4 | 50,7 | 50 |
| Raumgewicht | [kg/m³] | 170 | 170 | 170 | 170 | 170, | 170 |
| Zugfestigkeit | [kPa] | 250 | 270 | 310 | 280 | 310 | 280 |
| Reißdehnung | [%] | 32 | 33 | 35 | 30 | 35 | 31 |
| Weiterreißfestigkeit | [N/mm] | 0,86 | 0,91 | 0,99 | 0,98 | 0,99 | 1,13 |
| Stauchhärte bei 20% | [N/cm²] | 38 | 48 | 49 | 55 | 49 | 46 |
| Stauchhärte bei 60% | [N/cm²] | 193 | 200 | 211 | 225 | 211 | 197 |

Patentansprüche

1. Verfahren zur Herstellung von elastischen Polyurethanschaumstoffen durch Umsetzung von organischen Polyisocyanaten, Polyolen, Aminen und gegebenenfalls Kettenverlängerungs- oder Vernetzungsmitteln in Gegenwart von Treibmitteln, Katalysatoren, Hilfsmitteln und Zusatzstoffen, dadurch gekennzeichnet, daß man als Amine primäre und/oder sekundäre gegebenenfalls substituierte aliphatische und/oder cycloaliphatische Monoamine in einer Menge von 0,1 bis 10 Gewichtsteilen pro 100 Gewichtsteilen Polyol und/oder aromatische Monoamine in einer Menge von 0,1 bis 4 Gewichtsteilen pro 100 Gewichtsteilen Polyol verwendet.

2. Verfahren nach Anspruch 1, dadurch gekennzeichnet, daß die Monoamine als Substituenten Arylreste, Alkylreste mit 1 bis 8 Kohlenstoffatomen, Alkoxyreste mit 1 bis 6 Kohlenstoffatomen oder Halogenatome gebunden enthalten.